# EUROPEAN PATENT APPLICATION

(11) **EP 3 435 513 A1**
(43) Date of publication of application: **30.01.2019**
(21) Application number: 18185836.6
(22) Date of filing: 26.07.2018
(51) Int. Cl.: H02J 7/00, H01M 10/44

(54) **BATTERY CAPACITY GRADING CIRCUIT**

(30) Priority: 26.07.2017 CN 201720918842 U
(71) Applicant: Optimumnano Energy Co., Ltd, Pingshan New District Shenzhen Guangdong 518118 (CN)
(72) Inventor: Liang, Zhu, Shenzhen, Guangdong 518118 (CN); Chen, Gui hua, Shenzhen, Guangdong 518118 (CN); Rao, Mu min, Shenzhen, Guangdong 518118 (CN); Li, Yao, Shenzhen, Guangdong 518118 (CN)
(74) Representative: Greaves Brewster LLP

(57) **Abstract**

A battery capacity grading circuit includes a power supply, a first switch module, an inductor, a sampling module, a battery, a first control module, a second control module, and a second switch module. The first switch module is electrically coupled with the power supply, the inductor and the first control module. The sampling module is electrically coupled with inductor, the second switch module, and the first control module. The second switch module is electrically coupled with the battery and the second control module. The battery is electrically coupled with first control module. The second control module is electrically coupled with the first control module. The power supply charges the battery through the first switch module, the inductor, the sampling module, and the second switch module. The battery discharges to the power supply through the second switch module, the sampling module, the inductor, and the first switch module.

## Description

### BACKGROUND OF THE INVENTION

### Field of the Invention

This invention relates to battery capacity grading technologies, and more particular, to a battery capacity grading circuit.

### Description of the Related Art

Generally, it requires a series of charging and discharging processes such as battery formation and capacity grading during producing batteries to obtain finished batteries. The battery formation refers to the initial charging for newly produced batteries. The battery capacity grading refers to the selection of batteries that meets the certain capacity requirements according to the capacity measured after batteries are charged and discharged. After the batteries are manufactured, although the dimension of the batteries is the same, the capacity of the batteries are usually different. In an electric vehicle, batteries are connected in parallel connection and series connection to form a large capacity battery pack. If the batteries are not capacity graded, battery capacity of one battery in the battery pack will have a large difference to another battery. When discharging, some of the batteries have discharged, but the other part of the batteries are still discharging; when charging, some of the batteries are fully charged, but the other part of the batteries are still undervoltage, therefore it may cause overcharging and overdischarging for the batteries and may damage the batteries. In order to ensure the consistency of the battery in the batteries pack, it is usually fully charge the battery and then fully discharge the battery according to a standard constant current. The capacity of the battery is equal to the time multiply the standard constant current. However, the existing battery capacity measuring circuit has large measurement error and cannot be controlled by itself, thereby affecting battery capacity grading.

It is desirable to provide an invention, which can overcome the problems and limitations mentioned above.

### SUMMARY OF THE INVENTION

The present invention is directed to a battery capacity grading circuit that substantially obviates one or more of the problems due to limitations and disadvantages of the related art.

In an aspect of the present invention, there is provided a battery capacity grading circuit, includes a power supply, a first switch module, an inductor, a sampling module, a battery, a first control module, a second control module, and a second switch module. The first switch module is electrically coupled with the power supply, the inductor and the first control module. The sampling module is electrically coupled with inductor, the second switch module, and the first control module. The second switch module is electrically coupled with the battery and the second control module. The battery is electrically coupled with first control module. The second control module is electrically coupled with the first control module. The power supply charges the battery through the first switch module, the inductor, the sampling module, and the second switch module, the battery discharges to the power supply through the second switch module, the sampling module, the inductor, and the first switch module. The first switch module includes a first electronic switch and a second electronic switch. The second control module controls the power supply to charge battery or the battery to discharge to the power supply through the first control module. The sampling module is configured to detect a charging current when the power supply charges the battery and detect a discharging current when the battery discharges to the power supply and configured to transmit the charging current and the discharging current to the first control module. The first control module is configured to detect a charging voltage when the power supply charges the battery and detect a discharging voltage when the battery discharges to the power supply. When the second control module controls the power supply to charge the battery through the first control module, the first control module transmits a first pulse single to the first electronic switch according to the charging current and the charging voltage and controls conduction and cutoff frequencies of the first electronic switch, in order to control the charging current and the charging voltage. When the second control module controls the battery to discharge to the power supply through the first control module, the first control module transmits a second pulse single to the second electronic switch according to the discharging current and the discharging voltage and controls conduction and cutoff frequencies of the second electronic switch, in order to control the discharging current and the discharging voltage.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments without departing from the spirit or scope of the invention by one skilled in the art.
FIG. 1 is a block schematic diagram of a battery capacity grading circuit provided by one embodiment of the present invention, wherein the battery capacity grading circuit comprises a power supply, a first switch module, an inductor, a sampling module, a battery, a first control module, a second control module, a second switch module, and a protection module;
FIG. 2 is a circuit diagram of the first control module electrically coupled to the second control module of FIG. 1;
FIG. 3 is a circuit diagram of the first switch module of FIG. 1;
FIG. 4 is a circuit diagram of the second switch module of FIG. 1; and
FIG. 5 is a circuit diagram of the protection module of FIG. 1.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

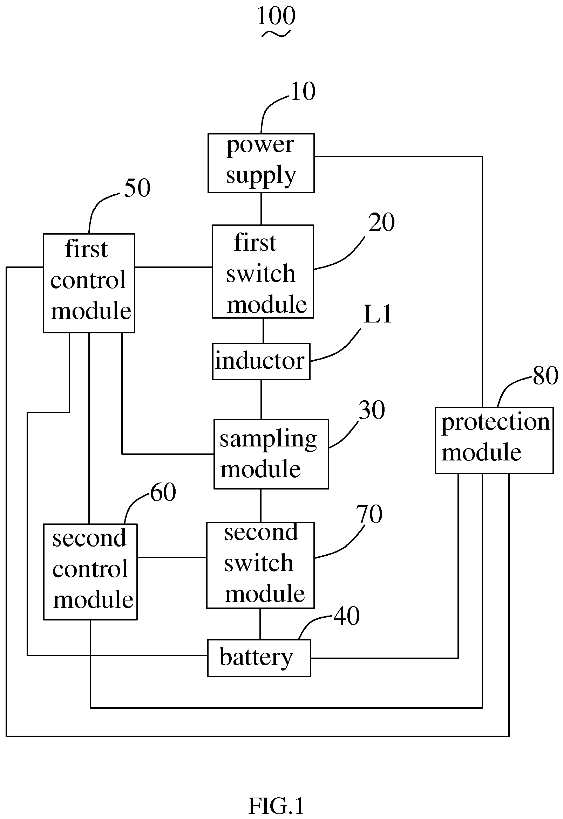

Fig. 1 illustrates a block schematic diagram of a battery capacity grading circuit 100 provided by one embodiment of the present invention. The battery capacity grading circuit 100 includes a power supply 10, a first switch module 20, an inductor L1, a sampling module 30, a battery 40, a first control module 50, a second control module 60, and a second switch module 70.

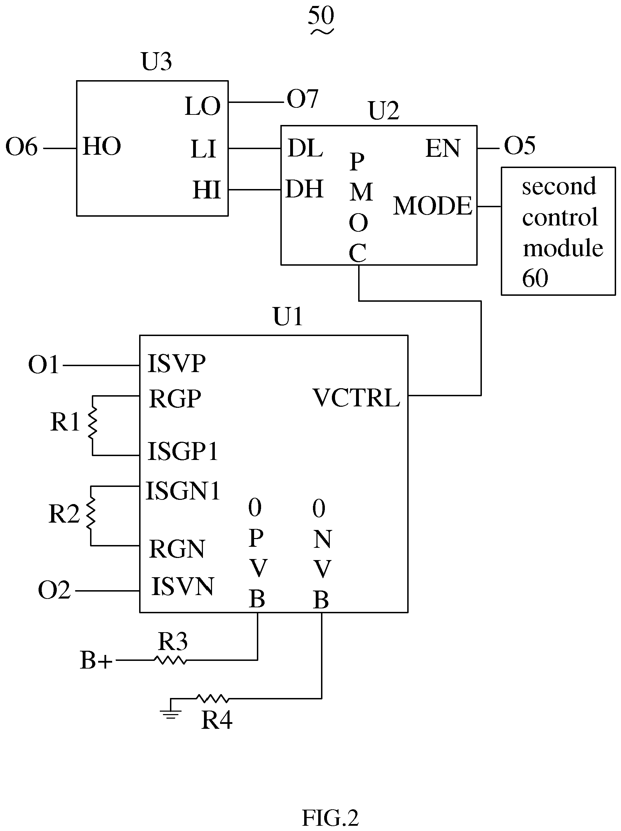

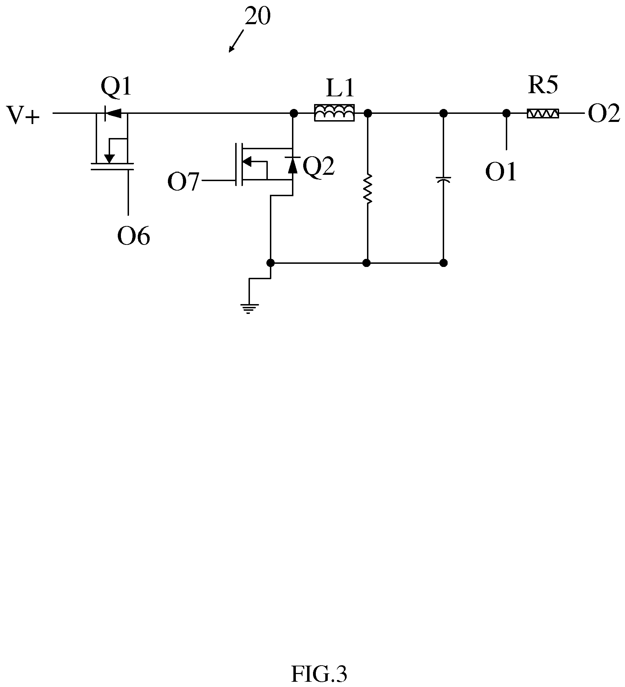

Please also refer to FIG. 2 and FIG. 3, the first switch module 20 is electrically coupled with the power supply 10, the inductor L1 and the first control module 50. The sampling module 30 is electrically coupled with inductor L1, the second switch module 70, and the first control module 50. The second switch module 70 is electrically coupled with the battery 40 and the second control module 60. The battery 40 is electrically coupled with first control module 50. The second control module 60 is electrically coupled with the first control module 50. The power supply 10 charges the battery 40 through the first switch module 20, the inductor L1, the sampling module 30, and the second switch module 70. The battery 40 discharges to the power supply 10 through the second switch module 70, the sampling module 30, the inductor L1, and the first switch module 20. The first switch module 20 includes a first electronic switch Q1 and a second electronic switch Q2. When the first electronic switch Q1 and the second electronic switch Q2 switch on, the power supply 10, the first switch module 20, the inductor L1, the sampling module 30, the second switch module 70, and the battery 40 cooperatively form a current circuit, the second control module 60 controls the power supply 10 to charge battery 40 or the battery 40 to discharge to the power supply 10 through the first control module 50.

The sampling module 30 is configured to detect a charging current when the power supply 10 charges the battery 40 and detect a discharging current when the battery 10 discharges to the power supply 10. The sampling module 30 is also configured to transmit the charging current and the discharging current to the first control module 50. The first control module 50 is configured to detect a charging voltage when the power supply 10 charges the battery 40 and detect a discharging voltage when the battery 40 discharges to the power supply 10. When the second control module 60 controls the power supply 10 to charge the battery 40 through the first control module 50, the first control module 50 transmits a first pulse single to the first electronic switch Q1 according to the charging current and the charging voltage and controls conduction and cutoff frequencies of the first electronic switch Q1, in order to control the charging current and the charging voltage. When the second control module 60 controls the battery 40 to discharge to the power supply 10 through the first control module 50, the first control module 50 transmits a second pulse single to the second electronic switch Q2 according to the discharging current and the discharging voltage and controls conduction and cutoff frequencies of the second electronic switch Q2, in order to control the discharging current and the discharging voltage. The second control module 60 controls the second switch module 70 to conduct or cutoff.

Please refer to FIG. 2, the first control module 50 includes a first chip U1, a second chip U2, a third chip U3, a first resistor R1, a second resistor R2, a third resistor R3, and a fourth resistor R4. The first chip U1 includes a first current feedback pin ISVP, a second current feedback pin ISVN, a first voltage feedback pin BVPO, a second voltage feedback pin BVNO, a first gain pin RGP, a second gain pin ISGP1, a third gain pin ISGN1, a fourth gain pin RGN, and an output pin VCTRL. The second chip U2 includes a first input pin COMP, a second input pin MODE, a third input pin EN, a first output pin DH, and a second output pin DL. The third chip U3 includes a first input pin HI, a second input pin LI, a first output pin HO, and a second output pin LO.

The first current feedback pin ISVP and the second current feedback pin ISVN of the first chip U1 are electrically coupled to the sampling module 30. The first voltage feedback pin BVPO of the first chip U1 is electrically coupled to a positive B+ of the battery 40 through the third resistor R3, the second voltage feedback pin BVNO of the first chip U1 is grounded through the fourth resistor R4. The first gain pin RGP of the first chip U1 is electrically coupled to the second gain pin ISGP1 through the first resistor R1. The third gain pin ISGN1 is electrically coupled to the fourth gain pin RGN through the second resistor R2. The output pin VCTRL of the first chip U1 is electrically coupled to the first input pin COMP of the second chip U2. The second input pin MODE of the second chip U2 is electrically coupled to the second control module 60. The first output pin DH of second chip U2 is electrically coupled to the first input pin HI of the third chip U3. The second output pin DL of the second chip U2 is electrically coupled to second input pin LI of the third chip U3. The first output pin HO of the third chip U3 is electrically coupled to the first electronic switch Q1, the second output pin LO of third chip U3 is electrically coupled to the second electronic switch Q2.

The charging current or the discharging current detected by the sampling module 30 is transmitted to the first chip U1 through the first current feedback pin ISVP and the second current feedback pin ISVN of the first chip U1. The first voltage feedback pin BVPO and the second voltage feedback pin BVNO detect the charging voltage or the discharging voltage when the power supply 10 to charge battery 40 or the battery 40 discharge to the power supply 10. The first gain pin RGP, the second gain pin ISGP1, the third gain pin ISGN1, and the fourth gain pin RGN is configured to select gain times for the charging current or the discharging current. The first output pin VCTRL is configured to transmit a first control signal to the second chip U2 according to the charging current and the charging voltage, or transmit a second control signal to the second chip U2 according to the discharging current and the discharging voltage. The first output pin DH of the second chip U2 transmits the first pulse signal to the first input pin HI of the third chip U3 according to the first control signal, and the third chip U3 enhances the first pulse signal. The first output pin HO of the third chip U3 outputs the enhanced first pulse signal to the first electronic switch Q1, to control conduction and cutoff frequencies of the first electronic switch Q1, and then the third chip U3 controls the charging current and the charging voltage when the power supply 10 charges the battery 40. In this case, the second output pin DL of the second chip U2 outputs a low level to the second input pin LI of the third chip U3, the third chip U3 enhances the low level. The second output pin LO of the third chip U3 outputs the enhanced low level to the second electronic switch Q2, the second electronic switch Q2 is severed as a diode.

The second output pin DL of the second chip U2 transmits the second pulse signal to the second input pin LI of the third chip U3 according to the second control signal, and the third chip U3 enhances the second pulse signal. The second output pin LO of the third chip U3 outputs the enhanced second pulse signal to the second electronic switch Q2, to control conduction and cutoff frequencies of the second electronic switch Q2, and then the third chip U3 controls the discharging current and the discharging voltage when the battery 40 discharges to the power supply 10. In this case, the first output pin DH of the second chip U2 outputs a low level to the first input pin HI of the third chip U3, the third chip U3 enhances the low level. The first output pin HO of the third chip U3 outputs the enhanced low level to the first electronic switch Q1, the first electronic switch Q1 is severed as a diode. The second control module 60 controls the power supply 10 to charge battery 40 or the battery 40 to discharge to the power supply 10 through the second input pin MODE of the second chip U2.

A negative of the power supply 10 and a negative of the battery 40 are grounded.

Please refer to FIG. 3, the sampling module 30 includes a fifth resistor R5. A first end of the fifth resistor R5 is electrically coupled to a first end of the inductor L1, a second end of the fifth resistor R5 is electrically coupled to the second switch module 70. A second end of the inductor L1 is electrically coupled to a first end of the second electronic switch Q2, a second end of the second electronic switch Q2 is grounded, a third end of the second electronic switch Q2 is electrically coupled to the second output pin LO of the third chip U3. A first end of the first electronic switch Q1 is electrically coupled to a first end of the second electronic switch Q2, a second end of the first electronic switch Q1 is electrically coupled to the positive V+ of the power supply 10, a third end of the first electronic switch Q1 is electrically coupled to the first output pin HO of the third chip U3. The fifth resistor R5 is configured to detect the charging current when the power supply 10 charges the battery 40 and detect the discharging current when the battery 40 discharges to the power supply 10, the charging current and the discharging current are transformed to voltages at two ends of the fifth resistor R5 and transmitted to the first current feedback pin ISVP and the second current feedback pin ISVN.

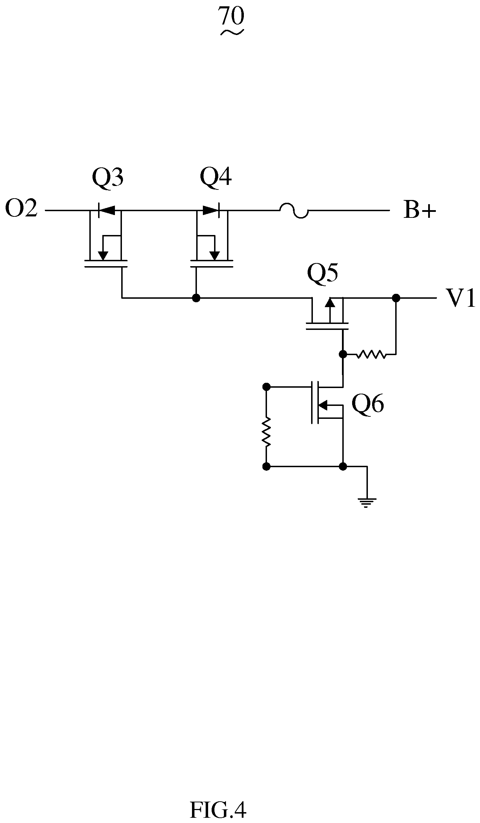

Please refer to FIG. 4, the second switch module 70 includes a third electronic switch Q3, a fourth electronic switch Q4, a fifth electronic switch Q5, a sixth electronic switch Q6, and a first power V1. A first end of the third electronic switch Q3 is electrically coupled to the second end of the fifth resistor R5, a second end of the third electronic switch Q3 is electrically coupled to a first end of the fourth electronic switch Q4, a third end of the third electronic switch Q3 is electrically coupled to a first end of the fifth electronic switch Q5. A second end of the fourth electronic switch Q4 is electrically coupled to the positive B+ of the battery 40, a third end of the fourth electronic switch Q4 is electrically coupled to the first end of the fifth electronic switch Q5. A second end of the fifth electronic switch Q5 is electrically coupled to the first power VI, a third end of the fifth electronic switch Q5 is electrically coupled to a first end of the sixth electronic switch Q6. A second end of the sixth electronic switch Q6 is electrically coupled to the second control module 60, a third end of the sixth electronic switch Q6 is grounded. In the embodiment, the second control module 60 outputs a high level to the second end of the sixth electronic switch Q6 to switch on the sixth electronic switch Q6, such that the third end of the fifth electronic switch Q5 is grounded and the fifth electronic switch Q5 switch on, the third end of the third electronic switch Q3 and the third end of the fourth electronic switch Q4 are electrically coupled to the first power VI, and the third electronic switch Q3 and the four electronic switch Q4 switch on.

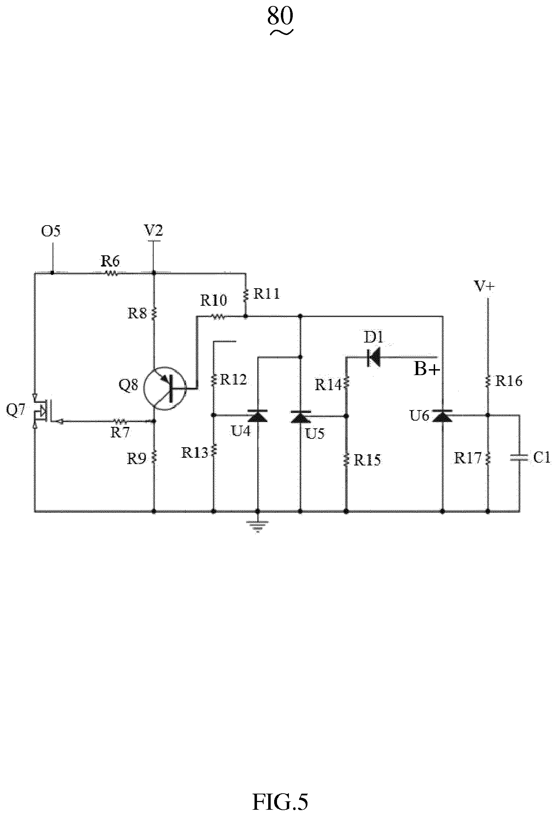

Please refer to FIG. 1 to FIG. 5, the battery capacity grading circuit 100 further includes a protection module 80. The protection module 80 includes a seventh electronic switch Q7, an eighth electronic switch Q8, a sixth resistor R6, a seventh resistor R7, an eighth resistor R8, a ninth resistor R9, a tenth resistor R10, a eleventh resistor R11, a twelfth resistor R12, a thirteenth resistor R13, a second power V2, and a first voltage-stabilizing tube U4. A first end of the seventh electronic switch Q7 is electrically coupled to a first end the sixth resistor R6, a second end of the seventh electronic switch Q7 is grounded, a third end of the seventh electronic switch Q7 is electrically coupled to a first end of the seventh resistor R7. A second end of the sixth resistor R6 is electrically coupled to the second power V2. A second end of the seventh resistor R7 is electrically coupled to a first end of eighth electronic switch Q8. The first end of eighth electronic switch Q8 is grounded through the ninth resistor R9, a second end of eighth electronic switch Q8 is electrically coupled to the second power V2 through the eighth resistor R8, and a third end of eighth electronic switch Q8 is electrically coupled to a first end of the tenth resistor R10. The second power V2 is electrically coupled to a second end of the tenth resistor R10 through the eleventh resistor R11. The second end of the tenth resistor R10 is further electrically coupled to a cathode of the first voltage-stabilizing tube U4. An anode of the first voltage-stabilizing tube U4 is grounded, a control end of the first voltage-stabilizing tube U4 is electrically coupled to the second control module 60 through the twelfth resistor R12, and the control end of the first voltage-stabilizing tube U4 is also grounded through the thirteenth resistor 13. The first end of the seventh electronic switch Q7 is also electrically coupled to the third input pin EN of the second chip U2. The second control module 60 outputs a voltage control signal to the control end of the first voltage-stabilizing tube U4 through the twelfth resistor R12, the anode and the cathode of the first voltage-stabilizing tube U4 conduct, the second end of the tenth resistor RIO is grounded, the eighth electronic switch Q8 switches on, and then the seventh electronic switch Q7 switches on, the third input pin EN of the second chip U2 is grounded such that the second chip U2 will not work, and the power supply 10 will stop charging the battery 40 or the battery 40 will stop discharging to the power supply 10. Therefore, it can achieve automatically controlling the power supply 10 charging the battery 40 or the battery 40 discharging to the power supply 10.

The protection module 80 further includes a second voltage-stabilizing tube U5, a fourteenth resistor R14, a fifteenth resistor R15, and a first diode D1. The second end of the tenth resistor R10 is electrically coupled to a cathode of the second voltage-stabilizing tube U5, an anode of second voltage-stabilizing tube U5 is grounded, and a control end of second voltage-stabilizing tube U5 is electrically coupled to a cathode of the first diode D1 through the fourteenth resistor R14. An anode of the first diode D1 is electrically coupled to the positive B+ of the battery 40. The control end of second voltage-stabilizing tube U5 is grounded through the fifth resistor R15. When the charging voltage during the power supply 10 charging the battery 40 or the discharging voltage during the battery 40 discharging to the power supply 10 is greater than a first preset value, the positive B+ of the battery 40 feedback the charging voltage or the discharging voltage to the control end of second voltage-stabilizing tube U5, such that the anode and the cathode of the second voltage-stabilizing tube U5 conduct, the second end of the tenth resistor R10 is grounded, and the eighth electronic switch Q8 switches on. Then the seventh electronic switch Q7 switches on, the third input pin EN of the second chip U2 is grounded such that the second chip U2 will not work, and the power supply 10 will stop charging the battery 40 or the battery 40 will stop discharging to the power supply 10. Therefore, it can achieve overvoltage protection during the power supply 10 charging the battery 40 or the battery 40 discharging to the power supply 10.

The protection module 80 further includes a third voltage-stabilizing tube U6, a sixteenth resistor R16, a seventeenth resistor R17, and a first capacitor C1. The second end of the tenth resistor R10 is electrically coupled to a cathode of the third voltage-stabilizing tube U6, an anode of third voltage-stabilizing tube U6 is grounded, and a control end of third voltage-stabilizing tube U6 is electrically coupled to the positive V+ of power supply 10 through the sixteenth resistor R16. The control end of third voltage-stabilizing tube U6 is grounded through seventeenth resistor R17 and the first capacitor C1. When the charging voltage during the power supply 10 charging the battery 40 or the discharging voltage during the battery 40 discharging to the power supply 10 is greater than a second preset value, the positive V+ of the power supply 10 feedbacks the charging voltage or the discharging voltage to the control end of the third voltage-stabilizing tube U6, such that the anode and the cathode of the third voltage-stabilizing tube U6 conduct, the second end of the tenth resistor R10 is grounded, and the eighth electronic switch Q8 switches on. Then the seventh electronic switch Q7 switches on, the third input pin EN of the second chip U2 is grounded such that the second chip U2 will not work, and the power supply 10 will stop charging the battery 40 or the battery 40 will stop discharging to the power supply 10. Therefore, it can achieve overvoltage protection during the power supply 10 charging the battery 40 or the battery 40 discharging to the power supply 10.

In the embodiment, the first electronic switch Q1, the second electronic switch Q2, the third electronic switch Q3, the fourth electronic switch Q4, the sixth electronic switch Q6, and the seventh electronic switch Q7 are PMOS fields effect tubes, the fifth electronic switch Q5 is an NMOS fields effect tube, and the eighth electronic switch Q8 is a PNP transistor.

The first end, the second end, and the third end of the first electronic switch Q1 are respectively the source, the drain, and the gate. The first end, the second end, and the third end of the second electronic switch Q2 are respectively the drain, the source, and the gate. The first end, the second end, and the third end of the third electronic switch Q3 are respectively the drain, the source, and the gate. The first end, the second end, and the third end of the fourth electronic switch Q4 are respectively the source, the drain, and the gate. The first end, the second end, and the third end of the sixth electronic switch Q6 are respectively the drain, the gate, and the source. The first end, the second end, and the third end of the seventh electronic switch Q7 are respectively the drain, the source, and the gate.

The first end, the second end, and the third end of the fifth electronic switch Q5 are respectively the drain, the source, and the gate.

The first end, the second end, and the third end of the eighth electronic switch Q8 are respectively the collector, the emitter, and the base.

In the capacity grading circuit 100 of the present invention, the first control module 50 controls the charging current or the charging voltage during the power supply 10 charging the battery 40 by controlling the conduction and cutoff frequencies of the first electronic switch Q1. The first control module 50 also controls the discharging current or discharging voltage during the battery 40 discharging to the power supply 10 by controlling the conduction and cutoff frequencies of the second electronic switch Q2. By the first control module 50 asynchronously controlling the first electronic switch Q1 and the second electronic switch Q2, it increases energy conversion efficiency during the power supply 10 charging the battery 40 or the battery 40 discharging to the power supply 10. The capacity grading circuit 100 is integrated designed and fewer components are used, it can save cost and accurately measured the capacity of the battery 40.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A battery capacity grading circuit (100), comprising:
a power supply (10), a first switch module (20), an inductor (LI), a sampling module (30), a battery (40), a first control module (50), a second control module (60), and a second switch module (70);
wherein the first switch module (20) is electrically coupled with the power supply (10), the inductor (LI) and the first control module (50); the sampling module (30) is electrically coupled with the inductor (LI), the second switch module (70), and the first control module (50); the second switch module (70) is electrically coupled with the battery (40) and the second control module (60); the battery (40) is electrically coupled with first control module (50); the second control module (60) is electrically coupled with the first control module (50); the power supply (10) charges the battery (40) through the first switch module (20), the inductor (LI), the sampling module (30), and the second switch module (70); the battery (40) discharges to the power supply (10) through the second switch module (70), the sampling module (30), the inductor (LI), and the first switch module (20);
wherein the first switch module (20) comprises a first electronic switch (Q1) and a second electronic switch (Q2); the second control module (60) controls the power supply (10) to charge battery (40) or the battery (40) to discharge to the power supply (10) through the first control module (50); the sampling module (30) is configured to detect a charging current when the power supply (10) charges the battery (40) and detect a discharging current when the battery (10) discharges to the power supply (10) and configured to transmit the charging current and the discharging current to the first control module (50);
wherein the first control module (50) is configured to detect a charging voltage when the power supply (10) charges the battery (40) and detect a discharging voltage when the battery (40) discharges to the power supply (10); when the second control module (60) controls the power supply (10) to charge the battery (40) through the first control module (50), the first control module (50) transmits a first pulse single to the first electronic switch (Q1) according to the charging current and the charging voltage and controls conduction and cutoff frequencies of the first electronic switch (Q1), in order to control the charging current and the charging voltage; when the second control module (60) controls the battery (40) to discharge to the power supply (10) through the first control module (50), the first control module (50) transmits a second pulse single to the second electronic switch (Q2) according to the discharging current and the discharging voltage and controls conduction and cutoff frequencies of the second electronic switch (Q2), in order to control the discharging current and the discharging voltage.

2. The battery capacity grading circuit (100) of claim 1, wherein the first control module (50) comprises a first chip (U1), a second chip (U2), a third chip (U3), a first resistor (R1), a second resistor (R2), a third resistor (R3), and a fourth resistor (R4); the first chip (U1) comprises a first current feedback pin (ISVP), a second current feedback pin (ISVN), a first voltage feedback pin (BVPO), a second voltage feedback pin (BVNO), a first gain pin (RGP), a second gain pin (ISGP1), a third gain pin (ISGN1), a fourth gain pin (RGN), and an output pin (VCTRL); the second chip (U2) comprises a first input pin (COMP), a second input pin (MODE), a third input pin (EN), a first output pin (DH), and a second output pin (DL); the third chip (U3) comprises a first input pin (HI), a second input pin (LI), a first output pin (HO), and a second output pin (LO);
wherein the first current feedback pin (ISVP) and the second current feedback pin (ISVN) of the first chip (U1) are electrically coupled to the sampling module (30); the first voltage feedback pin (BVPO) of the first chip (U1) is electrically coupled to a positive (B+) of the battery (40) through the third resistor (R3), the second voltage feedback pin (BVNO) of the first chip (U1) is grounded through the fourth resistor (R4); the first gain pin (RGP) of the first chip (U1) is electrically coupled to the second gain pin (ISGP1) through the first resistor (R1); the third gain pin (ISGN1) is electrically coupled to the fourth gain pin (RGN) through the second resistor (R2); the output pin (VCTRL) of the first chip (U1) is electrically coupled to the first input pin (COMP) of the second chip (U2); the second input pin (MODE) of the second chip (U2) is electrically coupled to the second control module (60); the first output pin (DH) of second chip (U2) is electrically coupled to the first input pin (HI) of the third chip (U3); the second output pin (DL) of the second chip (U2) is electrically coupled to the second input pin (LI) of the third chip (U3); the first output pin (HO) of the third chip (U3) is electrically coupled to the first electronic switch (Q1), the second output pin (LO) of third chip (U3) is electrically coupled to the second electronic switch (Q2).

3. The battery capacity grading circuit (100) of claim 2, wherein a negative of the power supply (10) and a negative of the battery (40) are grounded; the sampling module (30) comprises a fifth resistor (R5); a first end of the fifth resistor (R5) is electrically coupled to a first end of the inductor (LI), a second end of the fifth resistor (R5) is electrically coupled to the second switch module (70); a second end of the inductor (LI) is electrically coupled to a first end of the second electronic switch (Q2), a second end of the second electronic switch (Q2) is grounded, a third end of the second electronic switch (Q2) is electrically coupled to the second output pin (LO) of the third chip (U3); a first end of the first electronic switch (Q1) is electrically coupled to a first end of the second electronic switch (Q2), a second end of the first electronic switch (Q1) is electrically coupled to the positive (V+) of the power supply (10), a third end of the first electronic switch (Q1) is electrically coupled to the first output pin (HO) of the third chip (U3); the fifth resistor (R5) is configured to detect the charging current when the power supply (10) charges the battery (40) and detect discharging current when the battery (40) discharges to the power supply (10), the charging current and the discharging current are transformed to voltages at two ends of the fifth resistor (R5) and transmitted to the first current feedback pin (ISVP) and the second current feedback pin (ISVN).

4. The battery capacity grading circuit (100) of claim 3, wherein the second switch module (70) comprises a third electronic switch (Q3), a fourth electronic switch (Q4), a fifth electronic switch (Q5), a sixth electronic switch (Q6), and a first power (VI); a first end of the third electronic switch (Q3) is electrically coupled to the second end of the fifth resistor (R5), a second end of the third electronic switch (Q3) is electrically coupled to a first end of the fourth electronic switch (Q4), a third end of the third electronic switch (Q3) is electrically coupled to a first end of the fifth electronic switch (Q5); a second end of the fourth electronic switch (Q4) is electrically coupled to the positive (B+) of the battery (40), a third end of the fourth electronic switch (Q4) is electrically coupled to the first end of the fifth electronic switch (Q5); a second end of the fifth electronic switch (Q5) is electrically coupled to the first power (VI), a third end of the fifth electronic switch (Q5) is electrically coupled to a first end of the sixth electronic switch (Q6); a second end of the sixth electronic switch (Q6) is electrically coupled to the second control module (60), a third end of the sixth electronic switch (Q6) is grounded.

5. The battery capacity grading circuit (100) of claim 4, wherein the battery capacity grading circuit (100) further comprises a protection module (80); the protection module (80) comprises a seventh electronic switch (Q7), an eighth electronic switch (Q8), a sixth resistor (R6), a seventh resistor (R7), an eighth resistor (R8), a ninth resistor (R9), a tenth resistor (RIO), a eleventh resistor (R11), a twelfth resistor (R12), a thirteenth resistor (R13), a second power (V2), and a first voltage-stabilizing tube (U4); a first end of the seventh electronic switch (Q7) is electrically coupled to a first end the sixth resistor (R6), a second end of the seventh electronic switch (Q7) is grounded, a third end of the seventh electronic switch (Q7) is electrically coupled to a first end of the seventh resistor (R7); a second end of the sixth resistor (R6) is electrically coupled to the second power (V2); a second end of the seventh resistor (R7) is electrically coupled to a first end of eighth electronic switch (Q8); the first end of eighth electronic switch (Q8) is grounded through the ninth resistor (R9), a second end of eighth electronic switch (Q8) is electrically coupled to the second power (V2) through the eighth resistor (R8), and a third end of eighth electronic switch (Q8) is electrically coupled to a first end of the tenth resistor (RIO); the second power (V2) is electrically coupled to a second end of the tenth resistor (RIO) through the eleventh resistor (R11); the second end of the tenth resistor (RIO) is further electrically coupled to a cathode of the first voltage-stabilizing tube (U4); an anode of the first voltage-stabilizing tube (U4) is grounded, a control end of the first voltage-stabilizing tube (U4) is electrically coupled to the second control module (60) through the twelfth resistor (R12), and the control end of the first voltage-stabilizing tube (U4) is also grounded through the thirteenth resistor (13); the first end of the seventh electronic switch (Q7) is also electrically coupled to the third input pin (EN) of the second chip (U2).

6. The battery capacity grading circuit (100) of claim 5, wherein the protection module (80) further comprises a second voltage-stabilizing tube (U5), a fourteenth resistor (R14), a fifteenth resistor (R15), and a first diode (D1); the second end of the tenth resistor (RIO) is electrically coupled to a cathode of the second voltage-stabilizing tube (U5), an anode of second voltage-stabilizing tube (U5) is grounded, and a control end of second voltage-stabilizing tube (U5) is electrically coupled to a cathode of the first diode (D1) through the fourteenth resistor (R14); an anode of the first diode (D1) is electrically coupled to the positive (B+) of the battery (40); the control end of second voltage-stabilizing tube (U5) is grounded through the fifth resistor (R15).

7. The battery capacity grading circuit (100) of claim 6, wherein the protection module (80) further comprises a third voltage-stabilizing tube (U6), a sixteenth resistor (R16), a seventeenth resistor (R17), and a first capacitor (CI); the second end of the tenth resistor (RIO) is electrically coupled to a cathode of the third voltage-stabilizing tube (U6), an anode of third voltage-stabilizing tube (U6) is grounded, and a control end of third voltage-stabilizing tube (U6) is electrically coupled to the positive (V+) of power supply (10) through the sixteenth resistor (R16); the control end of third voltage-stabilizing tube (U6) is grounded through seventeenth resistor (R17) and the first capacitor (CI).

8. The battery capacity grading circuit (100) of claim 7, wherein the first electronic switch (Q1), the second electronic switch (Q2), the third electronic switch (Q3), the fourth electronic switch (Q4), the sixth electronic switch (Q6), and the seventh electronic switch (Q7) are PMOS fields effect tubes, the fifth electronic switch (Q5) is an NMOS fields effect tube, and the eighth electronic switch (Q8) is a PNP transistor.

9. The battery capacity grading circuit (100) of claim 8, wherein the first end, the second end, and the third end of the first electronic switch (Q1) are respectively the source, the drain, and the gate; the first end, the second end, and the third end of the second electronic switch (Q2) are respectively the drain, the source, and the gate; the first end, the second end, and the third end of the third electronic switch (Q3) are respectively the drain, the source, and the gate; the first end , the second end, and the third end of the fourth electronic switch (Q4) are respectively the source, the drain, and the gate; the first end, the second end, and the third end of the sixth electronic switch (Q6) are respectively the drain, the gate, and the source; the first end , the second end, and the third end of the seventh electronic switch (Q7) are respectively the drain, the source, and the gate.

10. The battery capacity grading circuit (100) of claim 8, wherein he first end, the second end, and the third end of the fifth electronic switch (Q5) are respectively the drain, the source, and the gate.

11. The battery capacity grading circuit (100) of claim 8, wherein the first end, the second end, and the third end of the fifth electronic switch (Q8) are respectively the collector, the emitter, and the base.

12. A battery capacity grading circuit (100), comprising:
a power supply (10);
a first switch module 20 electrically coupled with the power supply (10);
an inductor (LI) electrically coupled with first switch module (20);
a sampling module (30) electrically coupled with inductor (LI);
a battery (40;
a first control module (50) electrically coupled with first switch module (20), the sampling module (30), and the battery (40);
a second control module (60) electrically coupled with the first control module (50); and
a second switch module (70) electrically coupled with the sampling module (30), the battery (40), and the second control module (60);
wherein the first switch module (20) comprises a first electronic switch (Q1) and a second electronic switch (Q2); the sampling module (30) is configured to detect a charging current when the power supply (10) charges the battery (40) and detect a discharging current when the battery (10) discharges to the power supply (10) and configured to transmit the charging current and the discharging current to the first control module (50);
wherein the first control module (50) is configured to detect a charging voltage when the power supply (10) charges the battery (40) and detect a discharging voltage when the battery (40) discharges to the power supply (10); when the second control module (60) controls the power supply (10) to charge the battery (40) through the first control module (50), the first control module (50) transmits a first pulse single to the first electronic switch (Q1) according to the charging current and the charging voltage and controls conduction and cutoff frequencies of the first electronic switch (Q1), in order to control the charging current and the charging voltage; when the second control module (60) controls the battery (40) to discharge to the power supply (10 through the first control module (50), the first control module (50) transmits a second pulse single to the second electronic switch (Q2) according to the discharging current and the discharging voltage and controls conduction and cutoff frequencies of the second electronic switch (Q2), in order to control the discharging current and the discharging voltage.

13. The battery capacity grading circuit (100) of claim 12, wherein the first control module (50) comprises a first chip (U1), a second chip (U2), a third chip (U3), a first resistor (R1), a second resistor (R2), a third resistor (R3), and a fourth resistor (R4); the first chip (U1) comprises a first current feedback pin (ISVP), a second current feedback pin (ISVN), a first voltage feedback pin (BVPO), a second voltage feedback pin (BVNO), a first gain pin (RGP), a second gain pin (ISGP1), a third gain pin (ISGN1), a fourth gain pin (RGN), and an output pin (VCTRL); the second chip (U2) comprises a first input pin (COMP), a second input pin (MODE), a third input pin (EN), a first output pin (DH), and a second output pin (DL); the third chip (U3) comprises a first input pin (HI), a second input pin (LI), a first output pin (HO), and a second output pin (LO);
wherein the first current feedback pin (ISVP) and the second current feedback pin (ISVN) of the first chip (U1) are electrically coupled to the sampling module (30); the first voltage feedback pin (BVPO) of the first chip (U1) is electrically coupled to a positive (B+) of the battery (40) through the third resistor (R3), the second voltage feedback pin (BVNO) of the first chip (U1) is grounded through the fourth resistor (R4); the first gain pin (RGP) of the first chip (U1) is electrically coupled to the second gain pin (ISGP1) through the first resistor (R1); the third gain pin (ISGN1) is electrically coupled to the fourth gain pin (RGN) through the second resistor (R2); the output pin (VCTRL) of the first chip (U1) is electrically coupled to the first input pin (COMP) of the second chip (U2); the second input pin (MODE) of the second chip (U2) is electrically coupled to the second control module (60); the first output pin (DH) of second chip (U2) is electrically coupled to the first input pin (HI) of the third chip (U3); the second output pin (DL) of the second chip (U2) is electrically coupled to the second input pin (LI) of the third chip (U3); the first output pin (HO) of the third chip (U3) is electrically coupled to the first electronic switch (Q1), the second output pin (LO) of third chip (U3) is electrically coupled to the second electronic switch (Q2).

14. The battery capacity grading circuit (100) of claim 13, wherein a negative of the power supply (10) and a negative of the battery (40) are grounded; the sampling module (30) comprises a fifth resistor (R5); a first end of the fifth resistor (R5) is electrically coupled to a first end of the inductor (LI), a second end of the fifth resistor (R5) is electrically coupled to the second switch module (70); a second end of the inductor (LI) is electrically coupled to a first end of the second electronic switch (Q2), a second end of the second electronic switch (Q2) is grounded, a third end of the second electronic switch (Q2) is electrically coupled to the second output pin (LO) of the third chip (U3); a first end of the first electronic switch (Q1) is electrically coupled to a first end of the second electronic switch (Q2), a second end of the first electronic switch (Q1) is electrically coupled to the positive (V+) of the power supply (10), a third end of the first electronic switch (Q1) is electrically coupled to the first output pin (HO) of the third chip (U3); the fifth resistor (R5) is configured to detect the charging current when the power supply (10) charges the battery (40) and detect discharging current when the battery (40) discharges to the power supply (10), the charging current and the discharging current are transformed to voltages at two ends of the fifth resistor (R5) and transmitted to the first current feedback pin (ISVP) and the second current feedback pin (ISVN).

15. The battery capacity grading circuit (100) of claim 14, wherein the second switch module (70) comprises a third electronic switch (Q3), a fourth electronic switch (Q4), a fifth electronic switch (Q5), a sixth electronic switch (Q6), and a first power (VI); a first end of the third electronic switch (Q3) is electrically coupled to the second end of the fifth resistor (R5), a second end of the third electronic switch (Q3) is electrically coupled to a first end of the fourth electronic switch (Q4), a third end of the third electronic switch (Q3) is electrically coupled to a first end of the fifth electronic switch (Q5); a second end of the fourth electronic switch (Q4) is electrically coupled to the positive (B+) of the battery (40), a third end of the fourth electronic switch (Q4) is electrically coupled to the first end of the fifth electronic switch (Q5); a second end of the fifth electronic switch (Q5) is electrically coupled to the first power (VI), a third end of the fifth electronic switch (Q5) is electrically coupled to a first end of the sixth electronic switch (Q6); a second end of the sixth electronic switch (Q6) is electrically coupled to the second control module (60), a third end of the sixth electronic switch (Q6) is grounded.
